# EUROPEAN PATENT SPECIFICATION

(11) **EP 3 592 811 B1**
(45) Date of publication and mention of the grant of the patent: **06.04.2022**
(21) Application number: 18710020.1
(22) Date of filing: 07.03.2018
(51) Int. Cl.: C09D 5/00, B22F 1/00

(54) **COATING COMPOSITION CONTAINING METAL PARTICLES**
METALLTEILCHENHALTIGE BESCHICHTUNGSZUSAMMENSETZUNG
COMPOSITION DE REVÊTEMENT CONTENANT DES PARTICULES MÉTALLIQUES

(30) Priority: 10.03.2017 SG 10201701978U
(43) Date of publication of application: 15.01.2020
(73) Proprietor: Merck Patent GmbH, 64293 Darmstadt (DE)
(72) Inventor: LIM, Khwan Khung, Singapore 279712 (SG); KERSTEN, Jens, 64686 Lautertal (DE); ZELONKA, Lydia, 64385 Reichelsheim (DE); GRIESSMANN, Carsten, 64846 Gross-Zimmern (DE)
(86) International application number: PCT/EP2018/055593
(87) International publication number: WO 2018/162550

(56) References cited:
- WO-A1-2013/036519
- WO-A1-2014/113937
- WO-A1-2015/044189
- US-A1- 2008 003 363
- US-A1- 2011 135 808

## Description

The present invention is directed to a coating composition containing metal particles, in particular noble metal particles, to the use of such a coating composition for the production of attractive metallic decorative elements on articles having an outer silicatic surface such as of porcelain, ceramic, china, bone china, glass or enamel, to metallic coatings on such substrates and to a process for the production of coatings of this kind.

Decorative metallic coatings are highly desired for different consumer goods and architectural decorative elements. In particular gold and silver colored decorative elements apply to such goods the feeling of value and exclusivity.

In general, noble metal containing compositions for decorating glass, porcelain, china, bone cina, ceramics or similar surfaces consist of solutions of organic gold, organic palladium and/or organic platinum compounds being dissolved in appropriate organic carrier materials, of synthetic or natural resins as well as fluxes. Compositions of this kind exhibit a good adhesion to the respective substrate. Following their application to the substrate surface, the coating composition is fired and decomposes to the corresponding metal oxides and/or metals which adhere to the substrate and exhibit a glossy or matte visual impression of the surface decorations of gold or silver color depending on the starting compounds.

There are several methods known for the application of the coating compositions. Often, printing applications such as screen printing or tampon printing are used, but hand decoration by brush, stamping or by writing with a pencil is also still used.

The most common application process is screen printing. This process may be executed directly onto the surface of the silicate-type substrates as mentioned above, or may be executed in an indirect manner onto the surface of a transfer medium, wherefrom it is transferred to the surface of the corresponding silicate-type substrate. Although the screen printing process is of advantage, there is a desire to allow the application of decorative noble metal effect coatings onto silicatic surfaces by application processes which are faster than screen printing, such as ink jet printing and other high-velocity printing processes. In addition, the use of noble metal compounds like organic palladium compounds and organic platinum compounds for the creation of silver colored effects is very expensive. Thus, there is also a need to replace palladium and platinum by metals which are more cost effective and lead to similar silver colored decorations.

Although silver compounds lend themselves to being used as starting material for the production of decorative silver effects on silicatic surfaces, the decomposition of organic silver compounds alone does not lead to shiny attractive silver colored decorations on silicatic surfaces, since the formation of defined metallic silver films or particles cannot be achieved without uncontrolled formation of dark silver oxide as undesired by-product.

Furthermore, there have also been attempts to use noble metal particles in the corresponding coating compositions. Regarding noble metals such as gold, platinum or palladium, some applications of nano-sized metal particles in coating compositions could be found, e.g. for burnished gold.

US 2016/0236280 discloses a process for the production of a layer structure which comprises nano-sized gold particles. They are used in a polar, protic organic solvent for the production of a shiny laminate structure at low temperatures. Thus, the coating of paper based substrates is possible, since the coating composition on the substrate is heated at a temperature in the range of from 25 to 200°C only. A protective layer, if present, has to be applied in a second step after the application of the gold-containing coating composition onto the substrate and the heating thereof.

In WO 2014/113937 A1 a flexible conductive ink composition comprising a resin binder, silver-plated core conductive particles and conductive particles having a surface area of at least 1.0 m²/g is disclosed. Nano-sized metal particles as well as oxygen or nitrogen containing organic compounds of Si are not described.

WO 2013/036519 A1 discloses a method for making a conductive network of sintered silver, where a conductive ink comprising a silver compound and a binder is applied to a substrate and dried by an external energy source. The coating composition itself does neither contain nano-sized silver particles nor an oxygen or nitrogen containing organic compound of Si.

US 2011/135808 A1 describes a method of forming conductive features on a substrate, where a liquid composition containing metal nanoparticles with molecules of a stabilizer on the surface thereon, a polymeric binder and a liquid is used. The liquid composition does not contain any glass forming compounds.

In US 2008/0003363 A1 a composition of forming a pattern is disclosed which comprises metal nanoparticles of two different types, one thereof having a self-assembled monolayer which may contain Si and either oxygen or nitrogen. Any binder might be contained in this composition.

Since nano-sized silver particles corrode easily because of their high specific surface area, they were not successfully used so far for the production of decorative surface elements on silicatic surfaces.

Therefore, it is an object of the present invention to provide a coating composition which contains metal particles, in particular nano-sized metal particles, preferably noble metal particles, which allows the application of the coating composition in a simple way by means of a broad range of printing or coating processes and leads in a one-step process to the production of highly decorative glossy metal elements on silicatic substrates which are mechanically stable, scratch resistant as well as corrosion resistant. The application of nano-sized silver particles as the sole metal particles should be possible, thereby avoiding the disadvantage of corrosion. A further object of the present invention is to show how such coating compositions may be used. An additional object of the present invention is to provide glossy, attractive decorative coatings on silicatic surfaces and a process for the production thereof.

The object of the present invention is solved by a coating composition, comprising
A) 5 to 40 % by weight of metal particles exhibiting a d₅₀ value in the range of from 30 to 300 nm, the d₅₀ value measured by the volume related laser diffraction method, wherein the metal particles are selected from the group consisting of Ag, Au, Ru, Ir, Pd, Pt, Cu, Nb, or of an alloy containing at least one of these,
B) 1 to 30 % by weight of an organic compound of one or more elements selected from the group consisting of Si, Ge, Nb, Sn, Zn, Zr, Ti, Sb, Al, Bi, alkali metal or alkaline earth metal, with the proviso that at least an oxygen or nitrogen containing organic compound of Si is present which is not an alkoxy silane compound,
C) 5 to 25 % by weight of a binder containing at least one compound selected from the group of polyvinylacetales,
D) 10 to 70 % by weight of a solvent,
E) 0 to 10 % by weight of a rheology modifying additive, and
F) 0 to 5 % by weight of at least one metal salt compound, wherein the metal is selected from the group consisting of Co, Ni, Cu, Cr, Fe, Mn, Au, Rh, Ru, Ir, Os and Pt, based on the weight of the coating composition which adds to 100%.

The object of the present invention is also solved by the use of the above described coating composition for the manufacture of metallic, gold or silver colored decorative elements on articles exhibiting a surface of porcelain, china, bone china, ceramic, glass or enamel.

In addition, the object of the present invention is solved by a metal particles containing solid coating on a substrate, comprising, based on the weight of the solid coating, at least 60 % by weight of metal particles of at least one metal, selected from the group consisting of Ag, Au, Ru, Ir, Pd, Pt, Cu, Nb, or of an alloy containing at least one of these, and comprising at least 5% by weight, based on the weight of the solid coating, of a glass matrix consisting of SiO₂ or of a glass matrix comprising SiO₂ and at least one of alkali metal oxide, alkaline earth metal oxide, GeO₂, Nb₂O₃, SnO, SnO₂, ZnO, ZrO₂, TiO₂, Al₂O₃, Bi₂O₃ and Sb₂O₃.

Still furthermore, the object of the present invention is solved by a process for the production of a metal containing solid coating on a substrate, whereby a metal particles containing coating composition as described above is applied onto a substrate and is subsequently thermally treated at a temperature in the range of from 500 °C bis 1250 °C in an oxygen containing atmosphere.

The coating composition according to the present invention contains as ingredient A) 5 to 40% by weight, in particular 20 to 30% by weight, based on the total weight of the coating composition, of nano-sized metal particles exhibiting a d₅₀ value in the range of from 30 to 300 nm, preferably in the range of from 150 to 300 nm, whereby the d₅₀ value is measured by the volume related laser diffraction method according to ISO 13320:2009.

The nano-sized metal particles are selected from the group consisting of Ag, Au, Ru, Ir, Pd, Pt, Cu, Nb, or of an alloy containing at least one of these. They may be contained in the coating composition alone (only one kind of metal particles) or as a mixture of two or more thereof.

Preferably, the nano-sized metal particles are noble metal particles selected from the group consisting of Ag, Au, Ru, Ir, Pd, Pt, or of an alloy containing at least one of these. Most preferred, the nano-particles are of silver or of a silver alloy containing at least 50% by weight, based on the total weight of the alloy, of silver.

It is a great advantage of the present invention that coating compositions which contain merely silver nano-sized particles and no further metal particles are corrosion resistant for a time period of several months and may be used for the production of glossy silver colored decorative elements on silicatic surfaces which remain corrosion resistant too.

In addition to the nano-sized metal particles, the coating composition of the present invention does also contain as ingredient B) 1 to 30% by weight, in particular 1-15% by weight, based on the total weight of the coating composition, of an organic compound of one or more elements selected from the group consisting of Si, Ge, Nb, Sn, Zn, Zr, Ti, Sb, Al, Bi, alkali metal and alkaline earth metal, with the proviso that at least an oxygen or nitrogen containing organic compound of Si is present.

The respective compounds act as glass former in the resulting solid coating on a substrate, since they decompose upon thermal treatment to the corresponding metal oxides.

The main component of ingredient B) is the oxygen or nitrogen containing silicon compound which has to be present. It may be contained in the coating composition of the present invention as sole organic compound out of the organic metal compounds of ingredient B) mentioned above, but may also be present in combination with one or more of the organic compounds mentioned besides organic Si-compounds. The oxygen or nitrogen containing organic Si-compound forms a Si-O-based network upon thermal decomposition thereof in an oxygen containing atmosphere. In order to be useful for the present purpose, the corresponding oxygen or nitrogen containing organic Si-compounds must not evaporate prior to decomposition thereof. In addition, it has turned out that alkoxy silanes, although containing Si and oxygen, are not useful for the present purpose, since they easily undergo hydrolysis in case that traces of water might not be avoided in the coating composition. Therefore, it turned out that polysilazane compounds, polysiloxane compounds and silicone resins of general formula 1, formula 2 or formula 3 are the best choice for the oxygen or nitrogen containing organic silicon compound B). 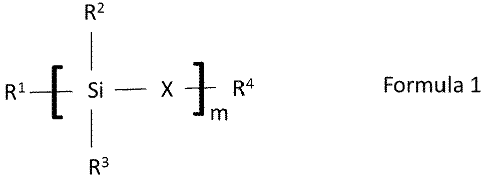 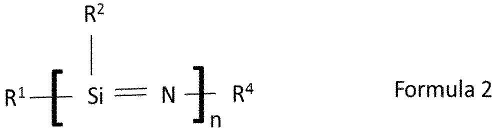 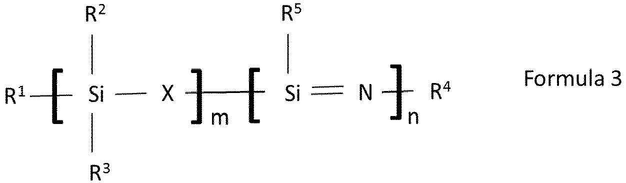 whereas
R¹ is a radical selected from the group consisting of H, C₁- C₁₈ alkyl, C₅-C₆- cycloalkyl, substituted or non-substituted phenyl, OH, OC₁- C₁₈ alkyl, NH₂ and N(C₁- C₁₈ alkyl)₂;
R², R³ and R⁵ is, independently from each other, a radical selected from the group consisting of H, C₁- C₁₈ alkyl, OH, OC₁- C₁₈ alkyl, NH₂, N(C₁- C₁₈ alkyl)₂, OSi(R¹)₃ and N=SiR¹;
R⁴ is a radical selected from the group consisting of H, C₁- C₁₈ alkyl, C₅-C₆- cycloalkyl and phenyl;
X is a radical of O or N; and
m and n is, independently from each other, an integer selected from the numbers in the range of from 1 to 100,
with the proviso that the boiling point of each of the materials is exceeding 150° C.

For example, Durazan 1066 (CAS-No. 346577-55-7) or Polydimethylsiloxane (CAS-No. 9016-00-6) may advantageously be used as oxygen or nitrogen containing organic Si-compound B) in the present coating composition.

In addition, silsesquioxane polymers of general formula 4 are advantageously useful as well: 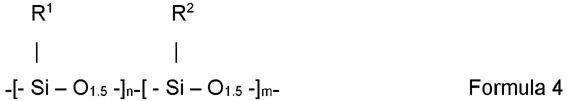 whereas
R¹ and R² are radicals equal or different from each other and are selected from the group consisting of hydrogen, alkyl, alkene, cycloalkyl, aryl, arylene and alkoxyl, and
m and n is, independently from each other, an integer selected from the numbers in the range of from 1 to 100,
with the proviso that the boiling point of each of the materials is exceeding 150° C.

Furthermore, in addition to the oxygen or nitrogen containing organic Si compound, organic compounds of the elements, selected from the group consisting of Ge, Nb, Sn, Zr, Ti, Sb, Al, Bi, alkali metal and/or alkaline earth metal may also be present in the coating composition of the present invention. These organic compounds may be alcoholates, carboxylates, citrates, acetylacetonates and/or tartrates of the corresponding elements. They are present, if at all, in an amount of from 1 to 30% by weight, based on the total weight of the compounds of ingredient B), in the present coating composition. In particular the content of the organic alkali metal compound and/or of the organic alkaline earth metal compound should not exceed 10% by weight, based on the total weight of the compounds of ingredient B).

Preferably, alcoholates of formula 5 are found suitable: 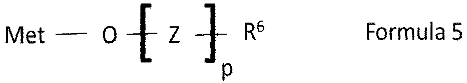 whereas,
- Met: is selected from the group consisting of Ge, Nb, Sn, Zr, Ti, Sb, Al, Bi, alkali metal and alkaline earth metal;
- Z: is selected from the group consisting of CO, SO₂ and SO₃,
- P: is 0 or 1,
- R⁶: is a radical selected from the group consisting of C₁- C₁₈ alkyl, C₅-C₆- cycloalkyl and substituted or non-substituted phenyl.

The coating composition according to the present invention does also comprise 5-25% by weight, preferably 5 to 15% by weight, based on the total weight of the coating composition, of a binder.

Unexpectedly, the present inventors did find that binders which contain at least one compound selected from the group of polyvinylacetales serve best for the purpose of providing a coating composition of the present kind which may be advantageously used in several printing and coating processes. The binder determines to a great extent the viscosity of the coating composition during the printing process. Although the coating composition has to be of a viscosity low enough to be printable or coatable in various printing or coating processes, the respective coating or printing layer, once applied, must remain stable on the substrate without distributing beyond the coated surface area. In addition, the binder must burn completely upon thermal treatment of the resulting coating or printing layer in the application field of the present coating composition. The group of polyvinylacatales fulfills these requirements in the present coating composition. Polyvinylacetales are polyvinylformal, polyvinylacetal and polyvinylbutural.

Their characteristics vary with the degree of acetalization thereof. Polyvinylbutyrales turned out to be the best choice for the present coating composition. Therefore, polyvinylbutyrales are preferably used as binder in the present coating composition. Especially useful are polyvinylbutyrales with an OH content of from 18 to 24% by weight.

Polyvinylbutyrales from Kuraray, which are sold under the tradenames Mowital^{®} and Pioloform^{®} may advantageously be used, in particular Mowital^{®} B 45 H and Mowital^{®} B 60 H which have an average molar mass of about 40.000 g/mol and about 55.000 g/mol, respectively, and exhibit a glass transition temperature of about 70°C each, whereby Mowital^{®} B 60 H is preferred. It goes without saying that polyvinylbutyrales of further companies having comparable characteristics are useful as well.

The polyvinylacetale containing binder may contain the polyvinylacetal to at least 50% by weight, based on the total weight of the binder, or may consist of at least one compound selected from the group of polyvinylacetales. Preferably, the binder comprises polyvinylbutyral. In the most preferred embodiment of the present invention, the binder consists of polyvinylbutyral.

Most preferred, the binder consists of a polyvinylburtyral having an average mol mass in the range of from 30.000 to 60.000 g/mol and an OH content of from 18 to 24% by weight.

The coating composition of the present invention does also contain 10 to 70 %, preferably 40 to 70 %, by weight of a solvent. The solvent is advantageously an organic solvent. Unfortunately, traces of water often may not be avoided in order to achieve at a content which equals nil, although the solvent in the present coating composition would at best contain solely organic solvents. Therefore, the organic solvent used in the present coating composition may contain water in a content of from 0 to at most 10% by weight, based on the weight of the solvent. In case that mixtures of organic solvents are used, which is preferred, each of the organic solvents may have a water content in the range of from 0 to at most 10% by weight, based on the weight of each organic solvent, whereby the maximum amount of water in the solvent mixture does not exceed 10% by weight. For the single organic solvent or the mixture of organic solvents, as the case may be, the water content is preferably from 0 to 5% by weight, more preferably from 0 to 3% by weight, for each single organic solvent used.

In principle, all organic solvents which are capable of dissolving the solid compounds (except the metal particles) and evaporate without residue at the temperature of the thermal treatment of the resulting coating layer on the silicatic substrate may be used in the present coating composition. Examples are alcohols such as ethanol, isopropanol, hexanol or 2-ethylhexanol, ethoxyethanol, methoxyethanol, methoxypropanol and mixtures of at least two thereof. In addition, ethers of polyalcohols are particularly useful, especially tri-propyleneglycol-monomethylether (TPM) and di-propyleneglycol-monomethylether (DPM). Most preferred are 2-ethylhexanol, tri-propyleneglycol-monomethylether (TPM) and di-propyleneglycol-monomethylether (DPM). All solvents may be used as sole solvent or in a mixture containing several solvents.

Optionally, non-alcohol solvents may also be present in the solvent mixture, for example, but not limited to ethers like dialkylpropyleneglycols, dioxane or THF, aromatic solvents like xylenes, saturated and non-saturated aliphatic hydrocarbons like terpenoic solvents and naphtha, amides like N-ethylpyrrolidone, esters like ethyl benzoate or fatty esters, in an amount of from 1 to up to 40% by weight, based on the weight of the solvent mixture.

By varying the amount of the solvent, the viscosity of the coating composition according to the present invention may be adapted to a value which is useful and appropriate in the corresponding coating or printing technique. It is a great advantage of the present invention that the coating composition may be used in several coating or printing techniques whereby a concentrated coating composition may be produced which may be diluted up to the requested value by simply adapting the content of the solvent and is , thus, useful for several coating or printing techniques including ink jet printing.

In addition to the necessary ingredients mentioned above, the coating composition of the present invention may also optionally comprise a rheology modifying agent in case that the viscosity of the coating composition has to be adapted further in a very particular manner. The rheology modifying agent may be contained in an amount of from 0 to 10% by weight, based on the weight of the coating composition. Preferably, an amount of from 0 to 8% by weight, in particular of from 0 to 5% by weight, is used. The rheology modifying agent used in the present coating composition may be selected from the group consisting of pine oil, castor oil, a fatty acid, a fatty acid derivative and a natural or synthetic wax.

Examples for fatty acids are linoleic acid, oleic acid, stearic acid, palmitic acid, myristic acid, lauric acid and capric acid. Derivatives thereof are useful as well.

Examples for natural and synthetic waxes are montane waxes of C₁₉ to C₃₀ hydrocarbons, canauba wax, tan waxes, collophonium waxes like abietic acid or rosin, or polyolefin waxes like Ceridust^{®} waxes of Clariant, to name only a few.

Still furthermore, the coating composition according to the present invention may also, optionally, contain at least one metal salt compound, wherein the metal salt is selected from the group consisting of Co, Ni, Cu, Cr, Fe, Mn, Au, Rh, Ru, Ir, Os and Pt. The said metal salt compound may be present in an amount of from 0 to 5% by weight, based on the weight of the coating composition, preferably in an amount of from 0 to 3 % by weight, in particular of from 0.1 to 1.5 % by weight. The metal salt serves for the adaption of the color of the resulting metal layer in the resulting coated product, and/or for facilitating the adherence of the respective coating composition to the substrate in the subsequent coating procedure. It is decomposed under the final thermal treatment of the coating composition on the coated substrate to the corresponding metal oxide and/or metal.

Preferably, organic metal salts are used in the coating composition according to the present invention. Examples are resinates, sulforesinates, thiolates, carboxylates and alcoholates. The metal salts are usually used as solution thereof in any of the organic solvents mentioned before.

It goes without saying that that all weight percentages mentioned above, in case they refer to the components A) to F) of the coating composition, refer to the total weight of the coating composition, which adds to 100% by weight.

Still furthermore, the coating composition according to the present invention may also contain further additives which are usually used for the production of metallic coatings on silicatic substrates, such as surface active agents, defoaming agents, organic pigments and fillers, further thixotropic agents and the like. In case they are used, the weight percentage of these additives is chosen to such an extent that the sum of components A) to F) and the further additives adds to 100% by weight as well.

The present invention is also directed to a process for the production of the coating composition described above, which is characterized in that the compounds A) to F) are intimately mixed with each other, whereby a ready-to-use coating composition is achieved. Preferably, a solution of the binder is prepared and the other components, preferably mixed with one or more of the solvents, are added successively thereto. If desired or necessary, one or more of the further additives mentioned above may be added as well. The mixing is preferably carried out by a rotor-stator-homogenizer or by a Speedmixer^{®} at ambient temperature. In some cases, deaeration may be of importance, depending on the amount and the kind of the solvent used.

It is a great advantage of the present invention that the process for the production of the coating composition is as simple as possible. The mere mixing of the components is sufficient in order to achieve at a stable coating composition which may be stored in closed containers for at least six months without degradation, decomposition or settling of the solid components. Depending on the content of solvents, rheology modifying agents and/or other thixotropic agents used, the thus prepared coating composition may be used in different coating or printing processes including ink jet printing. Therefore, a concentrated form of the present coating composition may serve the customer for the application thereof in several coating or printing processes, since the content of the solvent may also be adjusted at a later point of time at the customer's site.

The present invention is also directed to the use of a coating composition as described above for the manufacture of metallic, gold or silver colored decorative elements on articles exhibiting a silicatic surface, such as of porcelain, china, bone china, ceramic, glass or enamel.

In order to achieve at such metallic elements on silicatic surfaces as mentioned above, the coating composition according to the present invention must be applied to a silicatic surface of an article and subsequently treated further.

Therefore, the present invention is also directed to a process for the production of a metal containing coating on a substrate, whereby a coating composition composed as described above is applied onto the substrate and is subsequently treated at a temperature in the range of from 500 °C to 1250 °C. The treatment is executed in an oxygen containing atmosphere.

The substrate having the said silicatic surface is, according to the present invention, an article exhibiting a surface of porcelain, china, bone china, ceramic, glass or enamel. The kind of the article is not limited per se. In principle, all articles which may be enriched in decor or function by having a metallic layer of the metals mentioned as compound A) of the present coating composition on their surface may be used. Examples are tiles, architectural elements, glasses and china for household or professional application, and the like.

The coating composition may be applied onto the surface of the substrate either directly or by means of a transfer medium.

Direct application can take place by any process which is known to the skilled person in the field. The application of the coating composition onto the substrate can take place by dipping the substrate into the coating composition or by any coating or printing process, such as curtain coating, roller coating, spin coating, impregnation, pouring, dripping-on, squirting, spraying-on, doctor blade coating, painting or printing, whereby the printing may be an ink jet printing, screen printing, gravure printing, offset printing or pad printing process and the painting process is a pencil painting, brush painting or the like process.

The coating process is chosen dependent on the kind of substrate and the size and kind of coating which is to be applied onto the substrate. It goes without saying that the viscosity of the coating composition has to be adapted due to the required coating technique. Since the viscosity of the present coating composition is variably adjustable in most cases simply by altering the amount of the respective solvent(s), a concentrated coating composition according to the present invention may be used as base composition for use in more than one application technique.

Preferred printing processes are screen printing, gravure printing, pad printing and ink jet printing. Painting by means of a brush or pencil is also advantageously useful.

The application of the coating composition onto the substrate may also take place by an indirect process, i.e. by applying the coating composition onto a transfer medium in a first step, whereby in a second step the coating composition is applied to the substrate by means of the transfer medium which is pre-coated with the coating composition according to the present invention. The transfer medium may be composed of a polymer or paper carrier, e.g. in form of a decalcomania, which is pre-coated with the present coating composition and dried. The coating composition is then applied to the substrate by positioning the pre-coated carrier on the substrate and removing the polymer or paper carrier. The thermal treatment is executed in this case after application of the coating composition on the substrate, not after application of the coating composition on the polymer or paper carrier.

The substrate can have any shape which allows the application of the coating composition to the substrate. Flat substrates such as films, plates and sheets are as useful as three-dimensional substrates of any shape like a sphere or a cone, or any other useful three-dimensional shape. The substrate may be a compact or a hollow body having an outer and/or inner silicatic surface of porcelain, china, bone china, ceramic, glass or enamel which is to be covered by the coating composition of the present invention.

The silicatic surface of the substrate contains preferably at least one continuous area onto which the coating composition may be applied. The shape of the area covered by the coating composition may be any appropriate shape in form of regular or irregular patterns, lines, geometric shapes such as circles, squares, rectangles and the like, photographs, logos, bar codes, etc. Size and shape of the substrate area covered by the coating composition is limited merely by the kind of the coating or printing process used and/or by the geometrical shape of the substrate itself. The present coating process allows the manufacturing of patterns having very fine line diameters on the substrate.

The size of the coated area is in the range of from 0.5 mm² to 10m², in particular from 10 mm² to 5 m², and most preferred in the range of from 100 mm² to 1 m². Line diameters of from 0.01 mm to 10 cm, in particular of from 0.1 mm to 1 cm, are possible as well.

When the coating process according to the present invention is accomplished, a solid coating layer on the substrate is achieved, wherein the coating layer contains a continuous compact metallic layer comprising the nano-sized metal particles mentioned under component A) of the coating composition, whereby the nano-sized metal particles are at least partly enveloped by a glassy matrix. This metallic layer is covered by a glassy top coat. The glassy matrix as well as the glassy top coat contain metal oxides of the metals mentioned under components B) and, optionally, metals or metal oxides of the metals mentioned under components F) of the coating composition. At least, the glassy matrix and the glassy top coat contain a network made of silicon and oxygen atoms. Residual nitrogen atoms may be present as well. The top coat protects the metallic layer and prevents corrosion and/or mechanical or chemical decomposition thereof, whereas the matrix enveloping the metal particles enables the adherence of the nano-sized metal particles to the substrate.

Although the coating composition according to the present invention, being applied to the substrate and after execution of the thermal treatment, automatically includes a top coat which protects the metallic layer as explained above, it might be desired or of advantage to cover the resulting solid coating layer by one or more further protective layers. Therefore, the present process does also optionally include a process step wherein the metal particles containing coating composition may be further partly or fully covered with an additional protective layer. This process step may be executed prior to the thermal treatment of the then resulting layer stack or even after the execution of the thermal treatment of the metal particles containing coating composition on the substrate.

The present invention is also directed to a metal particles containing solid coating on a substrate, comprising, based on the weight of the solid coating, at least 60 % by weight of metal particles of at least one metal, selected from the group consisting of Ag, Au, Ru, Ir, Pd, Pt, Cu, Nb, or of an alloy containing at least one of these, and comprising at least 5% by weight, based on the weight of the solid coating, of a glass matrix either consisting of SiO₂, or comprising SiO₂ and at least one of alkali metal oxides, alkaline earth metal oxides, GeO₂, Nb₂O₃, SnO, SnO₂, ZnO, ZrO₂, TiO₂, Al₂O₃, Bi₂O₃ and Sb₂O₃.

The metal particles are the nano-sized metal particles of component A) as already described above with respect to the coating composition.

The content of the glass matrix is preferably in the range of from 5 to 40 % by weight, in particular of from 5 to 20% by weight, based on the weight of the solid coating. Thus, the content of the metal particles in the metal particles containing solid coating on the substrate is preferably at least 80%, i.e. in the range of from 80 to 95 % by weight of the total weight of the solid coating.

It is of advantage if the glass matrix contains alkali metal oxides and/or alkaline earth metal oxides up to a percentage of at most 5% by weight, based on the weight of the solid coating on the substrate, because alkali metal oxides and/or alkaline earth metal oxides in such a low concentration may improve the mechanical characteristics of the resulting coating with respect to scratch resistance and durability in long-term exposure to steam.

If present, the decomposition products of the metal salt(s) according to component F) of the coating composition count on the glass matrix content rather than counting on the metal particles content. Therefore, the glass matrix may also additionally contain one or more metals or metal oxides, the metal selected from the group Co, Ni, Cu, Cr, Fe, Mn, Au, Rh, Ru, Ir, Os and Pt.

Preferably, the glass matrix contains metals or metal oxides of Cu, Au, Rh and/or Ru, derived from the components of compound F).

In a preferred embodiment of the present invention, the metal particles in the metal particles containing solid coating on the substrate are composed of one or more noble metals selected from the group consisting of Ag, Au, Ru, Ir, Pd, Pt, or of an alloy containing at least one of these.

Most preferred is the embodiment, wherein the metal particles containing solid coating on a substrate merely contains metal particles of silver or of a silver containing alloy having a silver content of at least 50% by weight, based on the weight of the alloy.

As already explained above to some extent, the metal particles containing solid coating on a substrate is composed of two layers lying on top of each other, whereby a first layer is located directly on the substrate and constitutes a densely packed metallic layer comprising aggregated metal particles exhibiting a d₅₀ value in the range of from 50 to 300 nm, the d₅₀ value measured by the volume related laser diffraction method, wherein the metal particles are selected from the group consisting of Ag, Au, Ru, Ir, Pd, Pt, Cu, Nb, or of an alloy containing at least one of these, and wherein the second layer is located on top of the first layer and is a glass-like layer comprising at least SiO₂.

The densely packed metallic layer constitutes a continuous layer wherein the metal particles are still recognizable as particles exhibiting a d₅₀ value in the range of from 50 to 300 nm, but are aggregated and partly fused together and are, at least partly, enveloped by a glassy matrix which is composed of the same ingredients as the glass-like layer on top of the metallic layer.

A protective layer which has a glass-like structure and is either composed of a glass-matrix comprising SiO₂ alone or is composed of a glass matrix comprising SiO₂ in combination with one or more metal oxides selected from the group of alkali metal oxides, alkaline earth metal oxides, GeO₂, Nb₂O₃, SnO, SnO₂, ZnO, ZrO₂, TiO2, Al₂O₃, Bi₂O₃ and Sb₂O₃, is located on top of the metallic layer. The protective layer may also contain the decomposition products of component F), if present, that is to say one or more metals or metal oxides of metals selected from the group of Co, Ni, Cu, Cr, Fe, Mn, Au, Rh, Ru, Ir, Os, and Pt.

In a most preferred embodiment of the invention, the solid coating on the substrate, according to the present invention, is composed of a metallic layer which comprises particles of silver or of an alloy having a silver content of at least 50% by weight, based on the weight of the alloy, exhibiting a d₅₀ value in the range of from 50 to 300 nm as described above, which is located directly on the substrate, and of a glass-like layer on top of the metallic layer containing SiO₂ and rhodium. The amount of the metal (i.e. Ag or Ag alloy) is at least 85% by weight, the amount of SiO₂ at least 3% by weight and the amount of rhodium at most 0.5 % by weight, based on the weight of the coating which adds to 100%.

The glass-like layer as described above covers the metallic layer and enables the metallic layer to be protected against corrosion and mechanical or chemical decomposition. In addition, it provides a certain scratch resistance to the metallic layer underneath. The protective characteristic of the glass-like layer is strong enough to even prevent silver nano-particles, which are usually prone to strong corrosion, from corroding. Thus, it is, for the first time, possible to use silver nano-sized particles for the production of lustreous silvery decoration on pottery, glasses, tiles and the like with the coating composition according to the present invention.

The substrate whereon the solid coating layer is located is an article exhibiting an outer silicatic surface which is a surface of, for example porcelain, china, bone china, ceramic, glass or enamel. It goes without saying that the whole article may be composed of one of the materials mentioned above, but articles which do merely have a silicatic surface, wherein the body of the article is composed of a different material, shall also be included in the present invention. Of course, the surface of the article as well as the body thereof must withstand the temperature of the thermal treatment which is explained above. Shape and size of the article itself are not limited. The silicatic surface may either be an outer surface or an inner surface of the article (e.g. for hollow articles).

The present invention allows the coating of silicatic surfaces of articles in one coating step with a glossy or matte, as the case may be, metallic layer which exhibits a silver or golden colour and is protected against chemical or mechanical decomposition or corrosion. Even the coating composition itself has a long shelf life, i.e. is resistant against corrosion and decomposition for at least six months. The nano-sized metal particles used may be produced prior to use in an appropriate size and do not have to be produced in situ on the surface to be covered, as usual for gold decorations on silicatic surfaces. Since even nano-sized silver particles are stable enough in the present coating composition and in particular protected against corrosion, the use of silver instead of palladium and platinum is possible for the production of silver colored decorations on silicatic articles such as pottery, glasses and tiles for personell or industrial use, leading to an improved cost control in the production of the respective goods.

The present invention shall be explained in detail in the following examples, although it shall not be restricted thereto.

### Example 1:

0.361 g of Mowital B 45 H, dissolved in dipropylene glycol monomethyl ether (DPM) (17% solids content, product of Kuraray Europe GmbH, CAS-No. 68648-78-2) are metered into a container equipped with a stirrer. 0.013 g of Durazan 1066 (CAS-No. 346577-55-7), 0.602 g of a paste of silver nano-sized particles (d₅₀ of 70 nm, d₉₀ of 115 nm, in TPM (50% solids content in tripropylene glycol monomethyl ether) and 0.031 g of rhodium(II) 2-ethylhexanoat (2% in 2-ethylhexanol) are subsequently added under stirring.

The resulting paste is applied onto a glass plate by means of a brush. The glass plate coated with the coating composition is then fired at a temperature of 580 °C in air. The solvents evaporate and the organic compounds of the coating composition burn without remainings at this temperature. The resulting solid coating layer on the glass plate is composed of a glossy lower metallic layer of silver colour and an upper protective glass-like layer.

The layer is composed of 92.2% by weight of silver, 0.2% by weight of rhodium and 7.6% by weight of SiO₂, based on the weight of the layer.

### Example 2:

2.4 g of polyvinylbutyral binder (Mowital^{®} B 60 H, product of Kuraray Europe GmbH), dissolved in 17.6 g dipropylene glycol monomethylether, are metered into a container equipped with a stirrer. 1.0 g of sodium acetate is added and dissolved in the binder solution. 5 g of a Silsesquioxane polymer preparation (MP 60LAN, product of Merck KGaA), 60 g of a paste of silver nanosized particles (d₅₀ of 70 nm, 50 g solids in tripropylene glycol monomethyl ether), 3 g of a rhodium(III)-2-ethylhexanoate solution (2% in ethylhexanol), and 1.5 g of bismuth(III)-2-ethylhexanoate solution (70% in xylene) are subsequently added under stirring.

The resulting paste is applied onto a glass plate by means of a brush. The glass plate coated with the coating composition is then fired at a temperature of 580 °C in air. The solvents evaporate and the organic compounds of the coating composition burn without remainings at this temperature. The resulting solid coating layer on the glass plate is composed of a glossy lower metallic layer of silver colour and an upper protective glass-like layer.

The layer is composed of 93.3% by weight of silver, 4.1% by weight of SiO₂, 1.2% by weight of Na₂O, 1.2 % by weight of Bi₂O₃ and 0.2% by weight of rhodium, based on the weight of the layer.

## Claims

1. Coating composition, comprising
A) 5 to 40 % by weight of metal particles exhibiting a d₅₀ value in the range of from 30 to 300 nm, the d₅₀ value measured by the volume related laser diffraction method, wherein the metal particles are selected from the group consisting of Ag, Au, Ru, Ir, Pd, Pt, Cu, Nb, or of an alloy containing at least one of these,
B) 1 to 30 % by weight of an organic compound of one or more elements selected from the group consisting of Si, Ge, Nb, Sn, Zn, Zr, Ti, Sb, Al, Bi, alkali metal or alkaline earth metal, with the proviso that at least an oxygen or nitrogen containing organic compound of Si is present which is not an alkoxy silane compound,
C) 5 to 25 % by weight of a binder containing at least one compound selected from the group of polyvinylacetales,
D) 10 to 70 % by weight of a solvent,
E) 0 to 10 % by weight of a rheology modifying additive, and
F) 0 to 5 % by weight of at least one metal salt compound, wherein the metal is selected from the group consisting of Co, Ni, Cu, Cr, Fe, Mn, Au, Rh, Ru, Ir, Os and Pt,
based on the weight of the coating composition which adds to 100%.

2. Coating composition according to claim 1, **characterized in that** the metal particles are noble metal particles selected from the group consisting of Ag, Au, Ru, Ir, Pd, Pt, or of an alloy containing at least one of these.

3. Coating composition according to claim 1 or 2, **characterized in that** the metal particles are of silver or of a silver containing alloy having a silver content of at least 50 % by weight, based on the weight of the alloy.

4. Coating composition according to one or more of claims 1 to 3, **characterized in that** the organic compound B) is an alcoholate, carboxylate, citrate, acetylacetonate and/or tartrate of the elements, selected from Ge, Nb, Sn, Zn, Zr, Ti, Sb, Al, Bi, alkali metal and/or alkaline earth metal.

5. Coating composition according to one or more of claims 1 to 4, **characterized in that** the oxygen or nitrogen containing organic compound of Si is a polysilazane compound, a polysiloxane compound, a silicone resin and/or a silsesquioxane polymer.

6. Coating composition according to one or more of claims 1 to 5, **characterized in that** binder C) comprises polyvinylbutyral.

7. Coating composition according to one or more of claims 1 to 6, **characterized in that** solvent D) is an organic solvent or a mixture of organic solvents, having a water content in the range of from 0 to at most 10% by weight, based on the total weight of the solvents.

8. Coating composition according to one or more of claims 1 to 7, **characterized in that** the rheology modifying additive D) is pine oil, castor oil, a fatty acid, a fatty acid derivative, a natural or a synthetic wax.

9. Coating composition according to one or more of claims 1 to 8, **characterized in that** the metal salt compound is a resinate, a sulforesinate, a thiolate, a carboxylates or an alcoholate of at least one of the elements Co, Ni, Cu, Cr, Fe, Mn, Au, Rh, Ru, Ir, Os and Pt.

10. Process for the production of a coating composition according to one or more of claims 1 to 9, **characterized in that** compounds A) to F) are intimately mixed with each other and a ready-to-use coating composition is achieved.

11. Process according to claim 10, **characterized in that** further additives are added.

12. Process according to claim 10 or 11, **characterized in that** the mixing is carried out by a rotor-stator-homogenizer or a Speedmixer^{®}.

13. Use of a coating composition according to one or more of claims 1 to 9, for the manufacture of metallic, gold or silver colored decorative elements on articles exhibiting an outer surface of porcelain, china, bone china, ceramic, glass or enamel.

14. Metal particles for use in a coating composition of any of claims 1 to 9, containing solid coating on a substrate, comprising, based on the weight of the solid coating, at least 60 % by weight of metal particles of at least one metal, selected from the group consisting of Ag, Au, Ru, Ir, Pd, Pt, Cu, Nb, or of an alloy containing at least one of these, and comprising at least 5% by weight, based on the weight of the solid coating, of a glass matrix consisting of SiO₂ or comprising SiO₂ and at least one of alkali metal oxides, alkaline earth metal oxides, GeO₂, Nb₂O₃, SnO, SnO₂, ZnO, ZrO₂, TiO₂, Al₂O₃, Bi₂O₃ and Sb₂O₃.

15. Metal particles containing solid coating on a substrate according to claim 14, **characterized in that** the metal particles are of silver or of a silver containing alloy having a silver content of at least 50 % by weight, based on the weight of the alloy.

16. Metal particles containing solid coating on a substrate according to claim 14 or 15, **characterized in that** it additionally contains one or more metals or metal oxides, the metal selected from the group Co, Ni, Cu, Cr, Fe, Mn, Au, Rh, Ru, Ir, Os and Pt.

17. Metal particles containing solid coating on a substrate according to one or more of claims 14 to 16, **characterized in that** it comprises 5 to 40% by weight of the glass matrix, based on the weight of the solid coating.

18. Metal particles containing solid coating on a substrate according to claim 17, **characterized in that** it comprises 5 to 20 % by weight of the glass matrix, based on the weight of the solid coating.

19. Metal particles containing solid coating on a substrate according to one or more of claims 14 to 18, **characterized in that** the solid coating is composed of two layers lying on top of each other, whereby a first layer is located directly on the substrate and constitutes a densely packed metallic layer comprising aggregated metal particles exhibiting a d₅₀ value in the range of from 50 to 300 nm, the d₅₀ value measured by the volume related laser diffraction method, wherein the metal particles are selected from the group consisting of Ag, Au, Ru, Ir, Pd, Pt, Cu, Nb, or of an alloy containing at least one of these, and wherein the second layer is located on top of the first layer and is a glass-like layer comprising at least SiO₂.

20. Metal particles containing solid coating on a substrate according to one or more of claims 14 to 19, **characterized in that** the substrate is an article exhibiting an outer surface of porcelain, china, bone china, ceramic, glass or enamel.

21. Process for the production of a metal containing coating on a substrate, **characterized in that** a metal particles containing coating composition according to one or more of claims 1 to 14 is applied onto a substrate and is subsequently thermally treated at a temperature in the range of from 500 °C bis 1250 °C in an oxygen containing atmosphere.

22. Process according to claim 21, **characterized in that** the substrate is an article exhibiting a surface of porcelain, china, bone china, ceramic, glass or enamel.

23. Process according to claim 21 or 22, **characterized in that** the metal particles containing coating composition is directly applied onto the substrate.

24. Process according to claim 21 or 22, **characterized in that** the metal particles containing coating composition is applied onto the substrate by means of a transfer medium pre-coated with the metal particles containing coating composition.

25. Process according to one or more of claims 21 to 24, **characterized in that** the metal particles containing coating composition is applied onto said substrate or onto a transfer medium by means of a printing process.

26. Process according to one or more of claims 21 to 25, **characterized in that** the substrate coated with the metal particles containing coating composition is partly or in total covered by an additional protective layer prior to thermally treating the coating.

## Patentansprüche

1. Beschichtungszusammensetzung, enthaltend
A) 5 bis 40 Gew.-% Metallteilchen, die einen dso-Wert im Bereich von 30 bis 300 nm aufweisen, wo der dso-Wert mit dem volumenbezogenen Laserbeugungsverfahren gemessen wird, wobei die Metallteilchen aus der Gruppe bestehend aus Ag, Au, Ru, Ir, Pd, Pt, Cu, Nb oder aus einer Legierung, die mindestens eines von diesen enthält, ausgewählt sind,
B) 1 bis 30 Gew.-% einer organischen Verbindung eines oder mehrerer Elemente, die aus der Gruppe bestehend aus Si, Ge, Nb, Sn, Zn, Zr, Ti, Sb, Al, Bi, Alkalimetall oder Erdalkalimetall ausgewählt sind, mit der Maßgabe, dass mindestens eine sauerstoff- oder stickstoffhaltige organische Si-Verbindung vorhanden ist, bei der es sich nicht um eine Alkoxysilanverbindung handelt,
C) 5 bis 25 Gew.-% eines Bindemittels enthaltend mindestens eine Verbindung, die aus der Gruppe der Polyvinylacetale ausgewählt ist,
C) 10 bis 70 Gew.-% eines Lösungsmittels,
E) 0 bis 10 Gew.-% eines rheologiemodifizierenden Zusatzstoffs und
F) 0 bis 5 Gew.-% mindestens einer Metallsalzverbindung, wobei das Metall aus der Gruppe bestehend aus Co, Ni, Cu, Cr, Fe, Mn, Au, Rh, Ru, Ir, Os und Pt ausgewählt ist,
bezogen auf das Gewicht der Beschichtungszusammensetzung, das sich zu 100% addiert.

2. Beschichtungszusammensetzung nach Anspruch 1, **dadurch gekennzeichnet, dass** die Metallteilchen Edelmetallteilchen sind, die aus der Gruppe bestehend aus Ag, Au, Ru, Ir, Pd, Pt oder aus einer Legierung, die mindestens eines von diesen enthält, ausgewählt sind.

3. Beschichtungszusammensetzung nach Anspruch 1 oder 2, **dadurch gekennzeichnet, dass** die Metallteilchen aus Silber oder aus einer silberhaltigen Legierung mit einem Silbergehalt von mindestens 50 Gew.-%, bezogen auf das Gewicht der Legierung, bestehen.

4. Beschichtungszusammensetzung nach einem oder mehreren der Ansprüche 1 bis 3, **dadurch gekennzeichnet, dass** die organische Verbindung B) ein Alkoholat, Carboxylat, Citrat, Acetylacetonat und/oder Tartrat der aus Ge, Nb, Sn, Zn, Zr, Ti, Sb, Al, Bi, Alkalimetall und/oder Erdalkalimetall ausgewählten Elemente ist.

5. Beschichtungszusammensetzung nach einem oder mehreren der Ansprüche 1 bis 4, **dadurch gekennzeichnet, dass** die sauerstoff- oder stickstoffhaltige organische Si-Verbindung eine Polysilazanverbindung, eine Polysiloxanverbindung, ein Silikonharz und/oder ein Silsesquioxanpolymer ist.

6. Beschichtungszusammensetzung nach einem oder mehreren der Ansprüche 1 bis 5, **dadurch gekennzeichnet, dass** das Bindemittel C) Polyvinylbutyral enthält.

7. Beschichtungszusammensetzung nach einem oder mehreren der Ansprüche 1 bis 6, **dadurch gekennzeichnet, dass** das Lösungsmittel D) ein organisches Lösungsmittel oder ein Gemisch von organischen Lösungsmitteln, mit einem Wassergehalt im Bereich von 0 bis höchstens 10 Gew.-%, bezogen auf das Gesamtgewicht der Lösungsmittel, ist.

8. Beschichtungszusammensetzung nach einem oder mehreren der Ansprüche 1 bis 7, **dadurch gekennzeichnet, dass** der rheologiemodifizierende Zusatzstoff D) Kiefernöl, Rizinusöl, eine Fettsäure, ein Fettsäurederivat, ein natürliches oder ein synthetisches Wachs ist.

9. Beschichtungszusammensetzung nach einem oder mehreren der Ansprüche 1 bis 8, **dadurch gekennzeichnet, dass** die Metallsalzverbindung ein Resinat, ein Sulforesinat, ein Thiolat, ein Carboxylat oder ein Alkoholat von mindestens einem der Elemente Co, Ni, Cu, Cr, Fe, Mn, Au, Rh, Ru, Ir, Os und Pt ist.

10. Verfahren zur Herstellung einer Beschichtungszusammensetzung nach einem oder mehreren der Ansprüche 1 bis 9, **dadurch gekennzeichnet, dass** man die Verbindungen A) bis F) innig miteinander vermischt und eine gebrauchsfertige Beschichtungszusammensetzung erhält.

11. Verfahren nach Anspruch 10, **dadurch gekennzeichnet, dass** man weitere Zusatzstoffe zugibt.

12. Verfahren nach Anspruch 10 oder 11, **dadurch gekennzeichnet, dass** das Mischen durch einen Rotor-Stator-Homogenisator oder einen Speedmixer^{®} erfolgt.

13. Verwendung einer Beschichtungszusammensetzung nach einem oder mehreren der Ansprüche 1 bis 9 zur Herstellung von metallischen, gold- oder silberfarbigen Dekorelementen auf Gegenständen, die eine äußere Oberfläche aus Porzellan, Knochenporzellan, Keramik, Glas oder Emaille aufweisen.

14. Metallteilchen zur Verwendung in einer Beschichtungszusammensetzung irgendeines der Ansprüche 1 bis 9 enthaltende feste Beschichtung auf einem Substrat, enthaltend, bezogen auf das Gewicht der festen Beschichtung, mindestens 60 Gew.-% an Metallteilchen mindestens eines Metalls, das aus der Gruppe bestehend aus Ag, Au, Ru, Ir, Pd, Pt, Cu, Nb oder aus einer Legierung, die mindestens eines von diesen enthält, ausgewählt ist, und enthaltend mindestens 5 Gew.-%, bezogen auf das Gewicht der festen Beschichtung, einer Glasmatrix, die aus SiO₂ besteht oder SiO₂ und mindestens eines von Alkalimetalloxiden, Erdalkalimetalloxiden, GeO₂, Nb₂O₃, SnO, SnO₂, ZnO, ZrO₂, TiO₂, Al₂O₃, Bi₂O₃ und Sb₂O₃ enthält.

15. Metallteilchenhaltige feste Beschichtung auf einem Substrat nach Anspruch 14, **dadurch gekennzeichnet, dass** die Metallteilchen aus Silber oder aus einer silberhaltigen Legierung mit einem Silbergehalt von mindestens 50 Gew.-%, bezogen auf das Gewicht der Legierung, bestehen.

16. Metallteilchenhaltige feste Beschichtung auf einem Substrat nach Anspruch 14 oder 15, **dadurch gekennzeichnet, dass** sie zusätzlich ein oder mehrere Metalle oder Metalloxide enthält, wo das Metall aus der Gruppe Co, Ni, Cu, Cr, Fe, Mn, Au, Rh, Ru, Ir, Os und Pt ausgewählt ist.

17. Metallteilchenhaltige feste Beschichtung auf einem Substrat nach einem oder mehreren der Ansprüche 14 bis 16, **dadurch gekennzeichnet, dass** sie 5 bis 40 Gew.-% der Glasmatrix enthält, bezogen auf das Gewicht der festen Beschichtung.

18. Metallteilchenhaltige feste Beschichtung auf einem Substrat nach Anspruch 17, **dadurch gekennzeichnet, dass** sie 5 bis 20 Gew.-% der Glasmatrix enthält, bezogen auf das Gewicht der festen Beschichtung.

19. Metallteilchenhaltige feste Beschichtung auf einem Substrat nach einem oder mehreren der Ansprüche 14 bis 18, **dadurch gekennzeichnet, dass** die feste Beschichtung aus zwei übereinander liegenden Schichten aufgebaut ist, wobei sich eine erste Schicht direkt auf dem Substrat befindet und eine dicht gepackte metallische Schicht bildet, die aggregierte Metallteilchen, die einen dso-Wert im Bereich von 50 bis 300 nm aufweisen, enthält, wo der dso-Wert mit dem volumenbezogenen Laserbeugungsverfahren gemessen wird, wobei die Metallteilchen aus der Gruppe bestehend aus Ag, Au, Ru, Ir, Pd, Pt, Cu, Nb oder aus einer Legierung, die mindestens eines von diesen enthält, ausgewählt sind, und wobei sich die zweite Schicht auf der ersten Schicht befindet und eine glasartige, mindestens SiO₂ enthaltende Schicht ist.

20. Metallteilchenhaltige feste Beschichtung auf einem Substrat nach einem oder mehreren der Ansprüche 14 bis 19, **dadurch gekennzeichnet, dass** das Substrat ein Gegenstand ist, der eine äußere Oberfläche aus Porzellan, Knochenporzellan, Keramik, Glas oder Emaille aufweist.

21. Verfahren zur Herstellung einer metallhaltigen Beschichtung auf einem Substrat, **dadurch gekennzeichnet, dass** eine metallteilchenhaltige Beschichtungszusammensetzung nach einem oder mehreren der Ansprüche 1 bis 14 auf ein Substrat aufgebracht wird und anschließend bei einer Temperatur im Bereich von 500 °C bis 1250 °C in einer sauerstoffhaltigen Atmosphäre thermisch behandelt wird.

22. Verfahren nach Anspruch 21, **dadurch gekennzeichnet, dass** das Substrat ein Gegenstand ist, der eine Oberfläche aus Porzellan, Knochenporzellan, Keramik, Glas oder Emaille aufweist.

23. Verfahren nach Anspruch 21 oder 22, **dadurch gekennzeichnet, dass** die metallteilchenhaltige Beschichtungszusammensetzung direkt auf das Substrat aufgebracht wird.

24. Verfahren nach Anspruch 21 oder 22, **dadurch gekennzeichnet, dass** die metallteilchenhaltige Beschichtungszusammensetzung mittels eines Transfermediums, das mit der metallteilchenhaltigen Beschichtungszusammensetzung vorbeschichtet ist, auf das Substrat aufgebracht wird.

25. Verfahren nach einem oder mehreren der Ansprüche 21 bis 24, **dadurch gekennzeichnet, dass** die metallteilchenhaltige Beschichtungszusammensetzung unter Einsatz eines Druckverfahrens auf das Substrat oder auf ein Transfermedium aufgebracht wird.

26. Verfahren nach einem oder mehreren der Ansprüche 21 bis 25, **dadurch gekennzeichnet, dass** das mit der metallteilchenhaltigen Beschichtungszusammensetzung beschichtete Substrat vor der thermischen Behandlung der Beschichtung teilweise oder ganz mit einer zusätzlichen Schutzschicht bedeckt wird.

## Revendications

1. Composition de revêtement, comprenant
A) de 5 à 40% en poids de particules de métal présentant une valeur de dso dans la plage allant de 30 à 300 nm, la valeur de dso étant mesurée par la méthode de diffraction laser liée au volume, où les particules de métal sont choisies dans le groupe constitué par Ag, Au, Ru, Ir, Pd, Pt, Cu, Nb, ou par un alliage contenant au moins l'un parmi ceux-ci,
B) de 1 à 30% en poids d'un composé organique d'un ou plusieurs éléments choisis dans le groupe constitué par Si, Ge, Nb, Sn, Zn, Zr, Ti, Sb, Al, Bi, de métal alcalin ou de métal alcalino-terreux, à condition qu'au moins un composé organique oxygéné ou azoté de Si soit présent, qui n'est pas un composé d'alcoxysilane,
C) de 5 à 25% en poids d'un liant contenant au moins un composé choisi dans le groupe constitué par les acétals polyvinyliques,
D) de 10 à 70% en poids d'un solvant,
E) de 0 à 10% en poids d'un additif modifiant la rhéologie, et
F) de 0 à 5% en poids d'au moins un composé de sel de métal, où le métal est choisi dans le groupe constitué par Co, Ni, Cu, Cr, Fe, Mn, Au, Rh, Ru, Ir, Os et Pt,
sur la base du poids de la composition de revêtement qui totalise 100%.

2. Composition de revêtement selon la revendication 1, **caractérisée en ce que** les particules de métal sont des particules de métal noble choisi dans le groupe constitué par Ag, Au, Ru, Ir, Pd, Pt, ou parmi un alliage contenant au moins l'un parmi ceux-ci.

3. Composition de revêtement selon la revendication 1 ou 2, **caractérisée en ce que** les particules de métal sont constituées d'argent ou d'un alliage contenant de l'argent ayant une teneur en argent d'au moins 50% en poids, sur la base du poids de l'alliage.

4. Composition de revêtement selon l'une ou plusieurs parmi les revendications 1 à 3, **caractérisée en ce que** le composé organique B) est un alcoolate, un carboxylate, un citrate, un acétylacétonate et/ou un tartrate des éléments choisis parmi Ge, Nb, Sn, Zn, Zr, Ti, Sb, Al, Bi, de métal alcalin et/ou de métal alcalino-terreux.

5. Composition de revêtement selon l'une ou plusieurs parmi les revendications 1 à 4, **caractérisée en ce que** le composé organique oxygéné ou azoté de Si est un composé de polysilazane, un composé de polysiloxane, une résine de silicone et/ou un polymère de silsesquioxane.

6. Composition de revêtement selon l'une ou plusieurs parmi les revendications 1 à 5, **caractérisée en ce que** le liant C) comprend du butyral polyvinylique.

7. Composition de revêtement selon l'une ou plusieurs parmi les revendications 1 à 6, **caractérisée en ce que** le solvant D) est un solvant organique ou un mélange de solvants organiques, ayant une teneur en eau dans la plage allant de 0 à au plus 10% en poids, sur la base du poids total des solvants.

8. Composition de revêtement selon l'une ou plusieurs parmi les revendications 1 à 7, **caractérisée en ce que** l'additif modifiant la rhéologie D) est l'huile de pin, l'huile de ricin, un acide gras, un dérivé d'acide gras, une cire naturelle ou synthétique.

9. Composition de revêtement selon l'une ou plusieurs parmi les revendications 1 à 8, **caractérisée en ce que** le composé de sel de métal est un résinate, un sulforésinate, un thiolate, un carboxylate ou un alcoolate d'au moins l'un parmi les éléments Co, Ni, Cu, Cr, Fe, Mn, Au, Rh, Ru, Ir, Os et Pt.

10. Procédé de production d'une composition de revêtement selon l'une ou plusieurs parmi les revendications 1 à 9, **caractérisé en ce que** les composés A) à F) sont mélangés de manière intime les uns avec les autres et qu'une composition de revêtement prête à l'emploi est obtenue.

11. Procédé selon la revendication 10, **caractérisé en ce que** d'autres additifs sont ajoutés.

12. Procédé selon la revendication 10 ou 11, **caractérisé en ce que** le mélange est réalisé à l'aide d'un homogénéisateur rotor-stator ou d'un Speedmixer^{®}.

13. Utilisation d'une composition de revêtement selon l'une ou plusieurs parmi les revendications 1 à 9, pour la fabrication d'éléments décoratifs métalliques, de couleur dorée ou argentée sur des articles présentant une surface externe de porcelaine, de faïence fine, de porcelaine tendre, de céramique, de verre ou d'émail.

14. Particules de métal pour une utilisation dans une composition de revêtement selon l'une quelconque des revendications 1 à 9, contenant un revêtement solide sur un substrat, comprenant, sur la base du poids du revêtement solide, au moins 60% en poids de particules de métal d'au moins un métal, choisi dans le groupe constitué par Ag, Au, Ru, Ir, Pd, Pt, Cu, Nb, ou d'un alliage contenant au moins l'un parmi ceux-ci, et comprenant au moins 5% en poids, sur la base du poids du revêtement solide, d'une matrice de verre constituée par du SiO₂ ou comprenant du SiO₂ et au moins l'un parmi les oxydes de métaux alcalins, les oxydes de métaux alcalino-terreux, GeO₂, Nb₂O₃, SnO, SnO₂, ZnO, ZrO₂, TiO₂, Al₂O₃, Bi₂O₃ et Sb₂O₃.

15. Particules de métal contenant un revêtement solide sur un substrat selon la revendication 14, **caractérisées en ce que** les particules de métal sont constituées d'argent ou d'un alliage contenant de l'argent ayant une teneur en argent d'au moins 50% en poids, sur la base du poids de l'alliage.

16. Particules de métal contenant un revêtement solide sur un substrat selon la revendication 14 ou 15, **caractérisées en ce qu'**il contient en outre un ou plusieurs métaux ou oxydes de métaux, le métal étant choisi dans le groupe constitué par Co, Ni, Cu, Cr, Fe, Mn, Au, Rh, Ru, Ir, Os et Pt.

17. Particules de métal contenant un revêtement solide sur un substrat selon l'une ou plusieurs parmi les revendications 14 à 16, **caractérisées en ce qu'**il comprend de 5 à 40% en poids de la matrice de verre, sur la base du poids du revêtement solide.

18. Particules de métal contenant un revêtement solide sur un substrat selon la revendication 17, **caractérisées en ce qu'**il comprend de 5 à 20% en poids de la matrice de verre, sur la base du poids du revêtement solide.

19. Particules de métal contenant un revêtement solide sur un substrat selon l'une ou plusieurs parmi les revendications 14 à 18, **caractérisées en ce que** le revêtement solide est composé de deux couches reposant l'une sur l'autre, où une première couche est située directement sur le substrat et constitue une couche métallique très dense comprenant des particules de métal agrégées présentant une valeur de dso dans la plage allant de 50 à 300 nm, la valeur de dso étant mesurée par la méthode de diffraction laser liée au volume, où les particules de métal sont choisies dans le groupe constitué par Ag, Au, Ru, Ir, Pd, Pt, Cu, Nb, ou parmi un alliage contenant au moins l'un parmi ceux-ci, et où la deuxième couche est située au-dessus de la première couche et est une couche de type verre comprenant au moins du SiO₂.

20. Particules de métal contenant un revêtement solide sur un substrat selon l'une ou plusieurs parmi les revendications 14 à 19, **caractérisées en ce que** le substrat est un article présentant une surface externe de porcelaine, de faïence fine, de porcelaine tendre, de céramique, de verre ou d'émail.

21. Procédé de production d'un revêtement contenant du métal sur un substrat, **caractérisé en ce qu'**une composition de revêtement contenant des particules de métal selon l'une ou plusieurs parmi les revendications 1 à 14 est appliquée sur un substrat et est ensuite traitée thermiquement à une température dans la plage allant de 500°C à 1250°C dans une atmosphère contenant de l'oxygène.

22. Procédé selon la revendication 21, **caractérisé en ce que** le substrat est un article présentant une surface de porcelaine, de faïence fine, de porcelaine tendre, de céramique, de verre ou d'émail.

23. Procédé selon la revendication 21 ou 22, **caractérisé en ce que** la composition de revêtement contenant des particules de métal est appliquée directement sur le substrat.

24. Procédé selon la revendication 21 ou 22, **caractérisé en ce que** la composition de revêtement contenant des particules de métal est appliquée sur le substrat à l'aide d'un milieu de transfert préalablement revêtu par la composition de revêtement contenant des particules de métal.

25. Procédé selon l'une ou plusieurs parmi les revendications 21 à 24, **caractérisé en ce que** la composition de revêtement contenant des particules de métal est appliquée sur ledit substrat ou sur un milieu de transfert à l'aide d'un procédé d'impression.

26. Procédé selon l'une ou plusieurs parmi les revendications 21 à 25, **caractérisé en ce que** le substrat revêtu par la composition de revêtement contenant des particules de métal est recouvert partiellement ou totalement par une couche protectrice supplémentaire préalablement au traitement thermique du revêtement.
